Europäisches Patentamt

European Patent Office

Office européen des brevets

(19)

(11) Veröffentlichungsnummer : **0 413 138 B1**

(12)

# EUROPÄISCHE PATENTSCHRIFT

(45) Veröffentlichungstag der Patentschrift :
**10.03.93 Patentblatt 93/10**

(51) Int. Cl.$^5$ : **B01J 29/08,** B01J 37/06,
C01B 33/34

(21) Anmeldenummer : **90113393.4**

(22) Anmeldetag : **13.07.90**

(54) **Verfahren zur Herstellung von Zeolith Y.**

(30) Priorität : **16.08.89 DE 3927034**

(43) Veröffentlichungstag der Anmeldung :
**20.02.91 Patentblatt 91/08**

(45) Bekanntmachung des Hinweises auf die
Patenterteilung :
**10.03.93 Patentblatt 93/10**

(84) Benannte Vertragsstaaten :
**AT BE CH DE DK FR GB LI NL SE**

(56) Entgegenhaltungen :
**EP-A- 0 295 471**

(73) Patentinhaber : **Degussa Aktiengesellschaft
Weissfrauenstrasse 9
W-6000 Frankfurt am Main 1 (DE)**

(72) Erfinder : **Eckehart, Roland, Dr.
Hochstädter Landstrasse 102
W-6450 Hanau (DE)**
Erfinder : **Kleinschmit, Peter, Dr.
Wildaustrasse 19
W-6450 Hanau 9 (DE)**
Erfinder : **Kiss, Akos, Dr.
Odenwaldstrasse 16
W-8755 Alzenau-Wasserlos (DE)**
Erfinder : **Heindl, Frank
Südring 37
W-6458 Rodenbach 1 (DE)**

**Beschreibung**

Die Erfindung betrifft ein Verfahren zur Herstellung von Zeolith Y.

Es ist bekannt, Mordenit zur Entfernung von Siliciumdioxid mit wäßriger Lösung von NaOH bei einem pH-Wert von größer als 10,5 zu behandeln.

Die Konzentration der Natronlauge kann dabei 0,1 bis 15 N betragen. Die Temperatur beträgt 0 bis 100 °C, vorzugsweise 25 bis 75 °C, während die Behandlungsdauer 5 Minuten bis 5 Stunden beträgt. Diese Behandlung erhöht die Zugänglichkeit der inneren Poren (US-A 3,326,797). Diese derart behandelten Zeolithe werden als Hydrocracking- oder Isomerisierungskatalysatoren eingesetzt.

Gegenstand der Erfindung ist ein Verfahren zur Herstellung eines hydrophoben Zeolithen Y durch Dealuminierung von Zeolith NaY mit einem Verhältnis $SiO_2 : Al_2O_3 = 4,0$ bis $6,5$ mittels Siliciumtetrachlorid bei Temperaturen zwischen 300 und 480 °C, dadurch gekennzeichnet, daß man als Ausgangsmaterial einen Zeolith NaY mit einem $SiO_2/Al_2O_3$-Verhältnis von 4,0 bis 5,6 einsetzt, der zur Steigerung der inneren Oberfläche in wäßriger Suspension mit Natronlauge behandelt wurde.

Die Suspension kann einen pH-Wert von 10,5 bis 14 aufweisen.

Die Temperatur der Suspension kann 20 bis 100 °C betragen.

In einer bevorzugten Ausführungsform kann man die Behandlung des Zeolithen NaY direkt nach der Synthese in der Filteranlage durchführen.

Die Durchführung der Dealuminierung kann nach bekannten Verfahren, so zum Beispiel gemäß H. K. Beyer et al. in Imelik et al. Catalysis by Zeolites 1980 Elsevier, Scientific Publishing Company, Amsterdam, S. 203 bis 209, erfolgen.

Das erfindungsgemäße Verfahren weist den Vorteil auf, daß bei dem mit Natronlauge behandelten Zeolithen die Dealuminierung vollständiger und mit einem besseren Erhalt der Kristallinität verläuft.

Beispiele

Der als Ausgangssubstanz eingesetzte Zeolith NaY weist die folgenden physikalisch-chemischen Parameter auf:

```
Elementaranalyse (RFA):              SiO2 / Al2O3 = 5,3
                                     Na2O / Al2O3 = 1,1

(RFA = Röntgenfluoreszenzanalyse)
Glühverlust (1000 °C):               25,3 %
Spezifische Oberflälche nach BET
(DIN 66 131, Meßgas: Stickstoff,
Konditionierung: 1 h bei 400 °C):   770 m2/g
Wasseraufnahme (68 % rel. Feuchte,
20 °C):                              28,4 %
Mikroporenvolumen:                   0,35 cm3/g
```

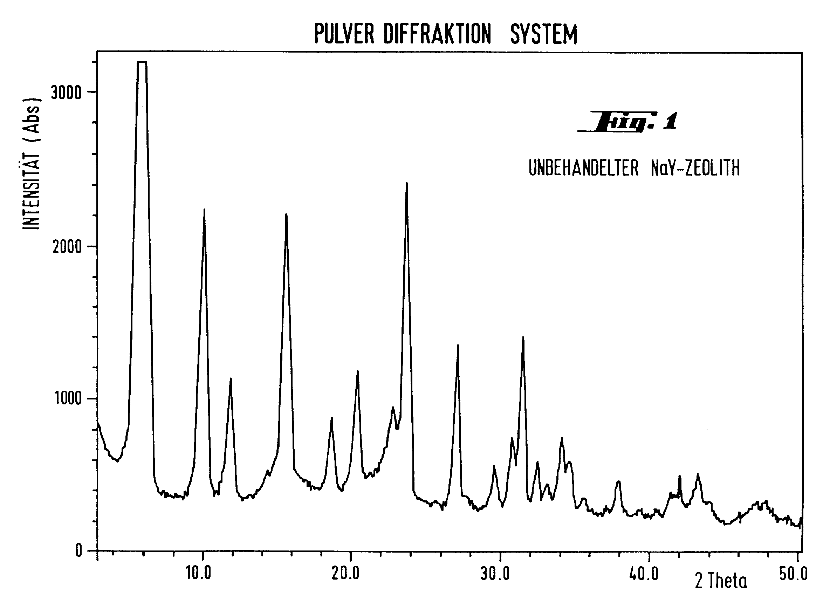

Röntgendiffraktogramm siehe Figur 1.

Beispiel 1

67 g NaY-Zeolith werden in 100 ml dest. Wasser suspendiert. Der pH-Wert dieser Aufschlämmung beträgt 10,8. Durch Zutropfen von 4,8 ml Natronlauge (8,3 % in wäßriger Lösung) innerhalb von 15 Minuten wird der pH-Wert auf 13 eingestellt. Danach wird die Lösung auf 60 °C während 15 Minuten aufgeheizt. Diese Temperatur wird weitere 15 Minuten gehalten. Anschließend wird der Zeolith filtriert und mit 2 l dest. Wasser gewaschen bis der pH-Wert des Waschwassers gegen Ende des Waschens < 10 ist. Der filtrierte Zeolith wird im Trockenschrank bei 120 °C während 14 Stunden getrocknet und dann bei 400 °C für 1 Stunde calciniert.

| | |
|---|---|
| Die spezifische Oberfläche nach BET beträgt (nach Konditionierung 1 h bei 400 °C) | 880 m²/g. |
| Das Mikroporenvolumen beträgt | 0,36 cm³/g. |
| Die Elementaranalyse (RFA) ergibt | $SiO_2/Al_2O_3 = 5,0$ $Na_2O/Al_2O_3 = 0,8$. |
| Die Wasseraufnahme beträgt (68 % rel. Feuchte, 20 °C) | 33,2 %. |

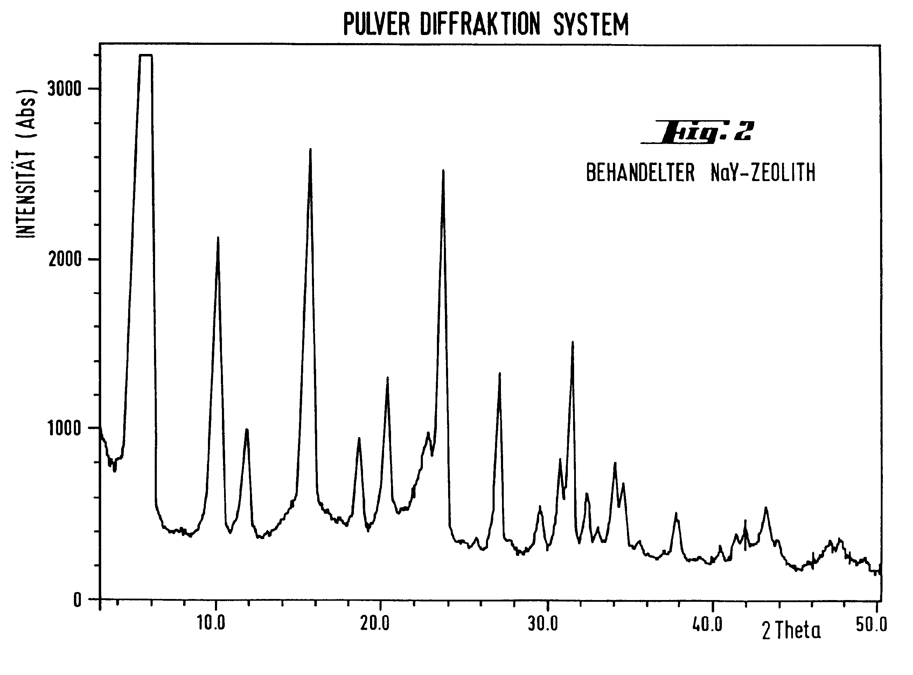

Das Röntgendifraktogramm zeigt Figur 2.

Nach der Na-OH-Behandlung wird ein Teil des Zeoliths resuspendiert. Diese Aufschlämmung wird mit 0,6 ml $H_2SO_4$ (d = 1,16 g/ml auf pH 6,5 angesäuert. Eine pH-Verschiebung wird während der nächsten 6 Stunden nicht beobachtet.

Der nicht behandelte Ausgangszeolith zeigte nach der Behandlung mit Säure, wobei der pH-Wert der Aufschlämmung auf 6 bis 7 eingestellt wird, eine ständige Verschiebung des pH-Wertes zum alkalischen Bereich, die durch weitere Zugabe an Säure ausgeglichen werden mußte.

Beispiel 2

Reaktionen mit Siliciumtetrachlorid

Sowohl ein gemäß Beispiel 1 mit NaOH behandelter als auch unbehandelter NaY-Zeolith werden mit $SiCl_4$ wie folgt dealuminiert:

50,0 g Zeolith werden in einem horizontal angeordneten Glasrohr (Innendurchmesser: 7 cm, Länge der Reaktonszone: 30 cm) unter Stickstoff (6 l/h) innerhalb von 1,5 Stunden auf 450 °C (Messung in der Gasphase über dem Zeolith) erhitzt. Nach weiteren 30 Minuten werden dann bei dieser Temperatur zusätzlich 90,0 ml (60,0 g) $SiCl_4$, die in einem Verdampfer (75 °C) in den gasförmigen Zustand überführt wurden, während 1 Stunde über den Zeolith geleitet. Danach läßt man den Zeolith über 2 Stunden im Inertgasstrom abkühlen. 10 g des Produkts werden in 200 ml Wasser suspendiert, 20 Minuten gerührt, filtriert und mit 1 l Wasser gewaschen. Schließlich wird der so erhaltene Zeolith über 14 Stunden im Trockenschrank bei 120 °C getrocknet und dann bei 400 °C 1 Stunde lang calciniert.

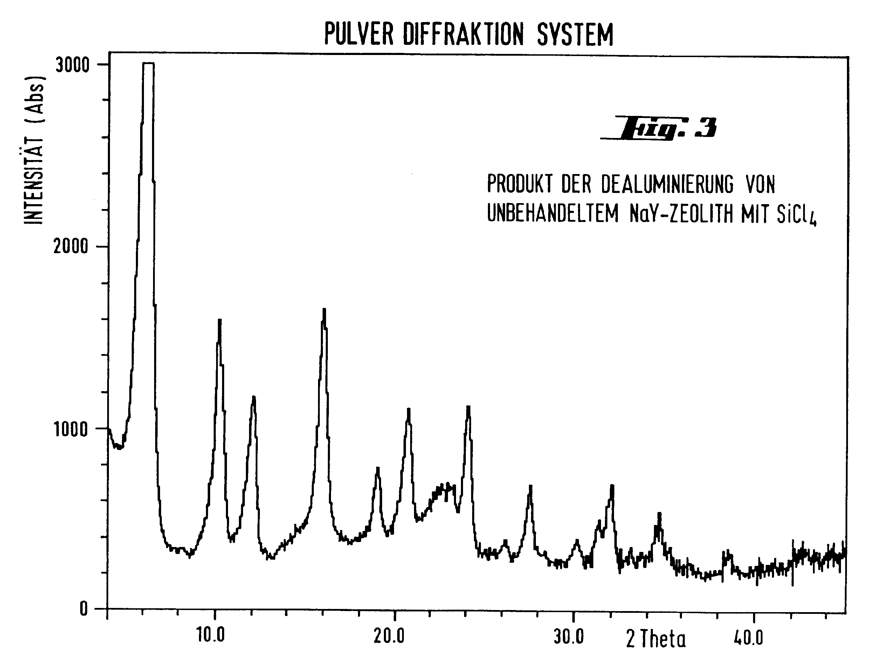

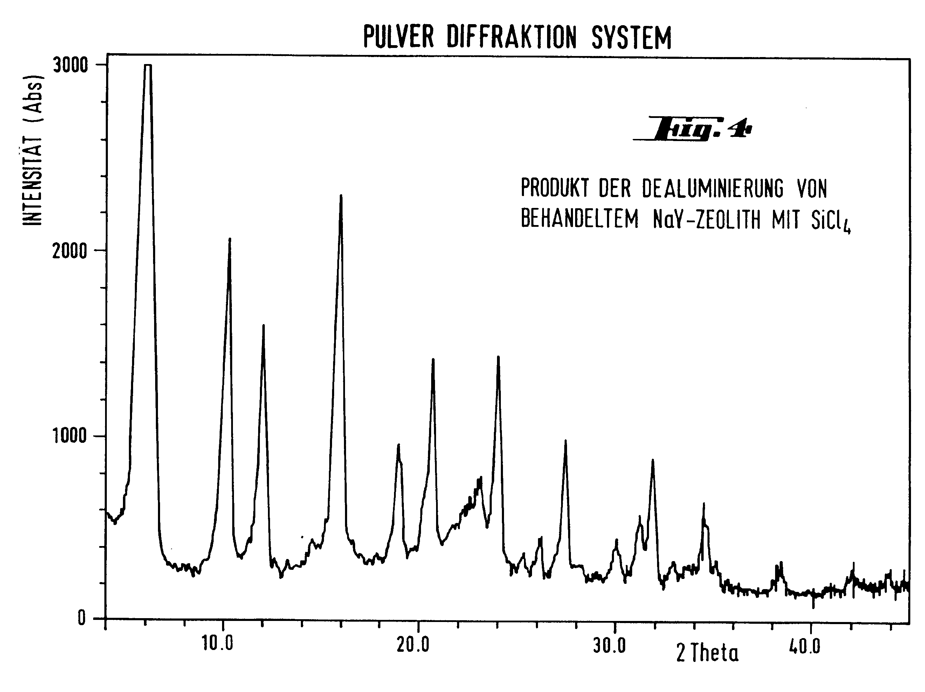

Für den mit NaOH behandelten Zeolith wird die Zellkonstante $a_o$ zu 24.23 A, für den unbehandelten zu 24.26 A bestimmt (Fehlerbreite: ± 0,03 A). Wie Figur 3 und 4 zeigen, ist die Röntgenkristallinität der Probe, die aus behandeltem NaY-Zeolith erhalten wurde, höher als die der Probe, die aus unbehandeltem NaY-Zeolith synthetisiert wird. Dies schlägt sich auch in den Adsorptionseigenschaften nieder. So nimmt die erste Probe (mit NaOH behandelt) bei einer p-Xylol-Konzentration von 1,0 g/m³ im Gleichgewicht 18,2 %, die andere dagegen nur 14,0 % ihres Gewichts auf (20 °C). Umgekehrt liegt bei der ersten Probe die Wasseradsorption bei 68 % rel. Feuchte mit 0,06 g Wasser pro g Zeolith niedriger als bei der zweiten mit 0,08 g. Dies ist ein Indiz dafür, daß beim behandelten Zeolith die Dealuminierung vollständiger und mit besserem Erhalt der Kristallinität verlaufen ist

Die Zeichnungen zeigen die Röntgendiffraktogramme der verschiedenen Zeolithe NaY.

Gemäß Figur 1 wird der unbehandelte Zeolith NaY entsprechend der Ausgangssubstanz bzw. gemäß Beispiel 2 dargestellt.

Gemäß Figur 2 wird der mit NaOH behandelte Zeolith NaY entsprechend den Beispielen 1 und 2 dargestellt.

Gemäß Figur 3 wird das Dealuminierungsprodukt des unbehandelten Zeolithen NaY gemäß Beispiel 2 dargestellt.

Gemäß Figur 4 wird das Dealuminierungsprodukt des behandelten Zeolithen NaY gemäß Beispiel 2 dargestellt.

**Patentansprüche**

1. Verfahren zur Herstellung eines hydrophoben Zeolithen Y durch Dealuminierung von Zeolith NaY mit einem Verhältnis $SiO_2 : Al_2O_3 = 4{,}0$ bis 6,5 mittels Siliciumtetrachlorid bei Temperaturen zwischen 300 und 480 °C, dadurch gekennzeichnet, daß man als Ausgangsmaterial einen Zeolith NaY mit einem $SiO_2/Al_2O_3$-Verhältnis von 4,0 bis 5,6 einsetzt, der zur Steigerung der inneren Oberfläche in wäßriger Suspension mit Natronlauge behandelt wurde.

2. Verfahren nach Anspruch 1, dadurch gekennzeichnet, daß die Suspension einen pH-Wert von 10,5 bis 14 aufweist.

3. Verfahren nach Anspruch 1 oder 2, dadurch gekennzeichnet, daß die Suspension eine Temperatur von 10 bis 100 °C aufweist.

4. Verfahren nach Anspruch 1 bis 3, dadurch gekennzeichnet, daß man die Behandlung des Zeolithen direkt nach der Synthese in der Filteranlage durchführt.

**Claims**

1. A process for the preparation of a hydrophobic zeolite Y by dealuminization of zeolite NaY having a ratio of $SiO_2 : Al_2O_3 = 4.0$ to 6.5 by means of silicon tetrachloride at temperatures of from 300 to 480°C, characterised in that the starting material used is a zeolite NaY having an $SiO_2/Al_2O_3$ ratio of from 4.0 to 5.6 which has been treated with sodium hydroxide solution in aqueous suspension to increase the internal surface area.

2. A process according to Claim 1, characterised in that the suspension has a pH of from 10.5 to 14.

3. A process according to Claim 1 or 2, characterised in that the suspension is at a temperature of from 10 to 100°C.

4. A process according to Claims 1 to 3, characterised in that the treatment of the zeolite is carried out directly after synthesis in the filtration apparatus.

**Revendications**

1. Procédé pour la préparation d'une zéolithe Y hydrophobe par désaluminisation d'une zéolithe NaY ayant un rapport $SiO_4 : Al_2O_3 = 4{,}0$ à 6,5, au moyen de tétrachlorure de silicium, à des températures comprises entre 300 et 480°C, caractérisé en ce que l'on utilise comme produit de départ une zéolithe NaY ayant un rapport $SiO_2/Al_2O_3$ de 4,0 à 5,6, qui, pour l'accroissement de la surface interne, a été traitée en suspension aqueuse par une solution d'hydroxyde de sodium.

2. Procédé selon la revendication 1, caractérisé en ce que la suspension présente un pH de 10,5 à 14.

3. Procédé selon la revendication 1 ou 2, caractérisé en ce que la suspension présente une température de 10 à 100°C.

4. Procédé selon l'une quelconque des revendications 1 à 3, caractérisé en ce que le traitement de la zéolithe est effectué directement après la synthèse, dans l'unité de filtration.

PULVER DIFFRAKTION SYSTEM

Fig. 1

UNBEHANDELTER NaY-ZEOLITH

EP 0 413 138 B1

PULVER DIFFRAKTION SYSTEM

*Fig. 2*

BEHANDELTER NaY-ZEOLITH

EP 0 413 138 B1

## PULVER DIFFRAKTION SYSTEM

**INTENSITÄT ( Abs )**

*Fig. 3*

PRODUKT DER DEALUMINIERUNG VON
UNBEHANDELTEM NaY-ZEOLITH MIT $SiCl_4$

2 Theta

EP 0 413 138 B1

## PULVER DIFFRAKTION SYSTEM

*Fig. 4*

PRODUKT DER DEALUMINIERUNG VON
BEHANDELTEM NaY-ZEOLITH MIT SiCl₄